# FASCICULE DE BREVET EUROPEEN

(11) **EP 0 702 312 B1**
(45) Date de publication et mention de la délivrance du brevet: **24.11.2004**
(21) Numéro de dépôt: 95402037.6
(22) Date de dépôt: 08.09.1995
(51) Int. Cl.: G06F 17/30

(54) **Dispositif de génération d'interfaces orientées objet pour des bases de données relationnelles et procédé mis en oeuvres par ledit dispositif**
Vorrichtung zum Erzeugen von objektorientierten Schnittstellen für relationale Datenbanken und von dieser Vorrichtung durchgeführtes Verfahren
System for generating object-oriented interfaces for relational databases, and method executed by said system

(30) Priorité: 13.09.1994 FR 9410912
(43) Date de publication de la demande: 20.03.1996
(73) Titulaire: BULL S.A., 78430 Louveciennes (FR)
(72) Inventeur: Exertier, François, F-38660 Saint-Vincent de Mercuze (FR)

(56) Documents cités:
- EP-A- 0 504 085
- PROCEEDINGS OF THE 32ND ANNUAL SOUTHEAST CONFERENCE, PROCEEDINGS OF SEC '94. 32ND ANNUAL ACM SOUTHEAST CONFERENCE, TUSCALOOSA, AL, USA, 17-18 MARCH 1994, ISBN 0-89791-637-9, 1994, NEW YORK, NY, USA, ACM, USA, pages 162-165, RAMANATHAN C 'Providing object-oriented access to a relational database'
- USENIX C++ TECHNICAL CONFERENCE PROCEEDINGS, PORTLAND, OR, USA, 10-13 AUG. 1992, 1992, BERKELEY, CA, USA, USENIX ASSOC, USA, pages 151-169, ALASHQUR A ET AL 'O-R Gateway: a system for connecting C++ application programs and relational databases'
- INTEROPERABLE DATABASE SYSTEMS (DS-5) IFIP WG2.6 DATABASE SEMANTICS CONFERENCE, LORNE, VIC., AUSTRALIA, 16-20 NOV. 1992, vol. A-25, ISSN 0926-5473, IFIP TRANSACTIONS A (COMPUTER SCIENCE AND TECHNOLOGY), 1993, NETHERLANDS, pages 69-85, LING-LING YAN ET AL 'Translating relational schema with constraints into OODB schema'
- COMPUTER STANDARDS AND INTERFACES, vol. 13, no. 1 / 03, 1 Janvier 1991 pages 221-230, XP 000288495 BEECH D ET AL 'OBJECT DATABASES AS GENERALIZATIONS OF RELATIONAL DATABASES'

## Description

La présente invention concerne un dispositif de génération d'interfaces orientées objet pour autoriser l'accès de nouvelles applications développées dans des environnements orientés objet à des bases de données relationnelles existantes. Elle concerne également un procédé mis en oeuvre par ledit dispositif.

De manière générale, pour des raisons de simplicité de représentation des données et afin de permettre une meilleure productivité des développeurs et utilisateurs, le modèle de données relationnel est couramment utilisé car il permet une représentation tabulaire aussi bien des objets que des associations entre objets. Dans ce cas, une base de données relationnelle se présente comme un ensemble de relations d'où le nom du modèle, ces relations étant aussi appelées tables. A une base de données est associé un schéma conceptuel qui décrit la structure et le type de données qu'elle contient et éventuellement, et c'est le cas dans la présente application, les contraintes ou règles qui doivent toujours être vérifiées, la base de données est elle-même gérée par un système de gestion de bases de données. Toute relation a également un schéma qui décrit sa structure et une extension qui correspond à l'état de cette relation à un instant donné. Le schéma d'une table est composé d'un ensemble d'attributs (ou colonnes) dont un sous-ensemble constitue la clé qui permet d'identifier les autres attributs de la relation ou un élément (n-uplet) de la relation. L'extension d'une relation est constituée par un ensemble de n-uplets (ou lignes). Un n-uplet correspond à un ensemble de valeurs prises par les attributs d'une table pour représenter un objet ou un lien entre des objets du monde réel. Deux relations partageant des attributs de même domaine peuvent être jointes, on parle alors de jointure des relations, cette jointure étant réalisée selon un ou plusieurs de ces attributs appelés attributs de jointure. La jointure de deux tables peut être ainsi obtenue, elle permet de faire un rapprochement entre ces deux tables par comparaison des valeurs des colonnes de ces deux tables, les colonnes utilisées pour la comparaison étant appelées colonnes de jointure. Le résultat de cette jointure est une troisième table dont les colonnes proviennent des deux tables et les lignes sont celles des deux tables vérifiant le critère de comparaison. Dans cet esprit, l'utilisation d'un langage standard de définition et de manipulation de données tel que, par exemple, le langage SQL (Structured Query Language), apparaît très avantageuse pour la définition et la manipulation des bases de données relationnelles. Le modèle, de plus, permet de donner des informations sémantiques supplémentaires sur les attributs des relations en imposant des contraintes d'intégrité référentielles. Ainsi, en termes de clés, un attribut défini comme clé primaire permet de déterminer de façon unique le n-uplet dont il fait partie, une valeur donnée pour cet attribut ne pouvant pas se retrouver dans deux n-uplets différents. Egalement, un attribut défini comme clé étrangère permet de référencer la clé primaire d'une autre table. Il est alors possible de définir un lien entre ces deux tables par l'intermédiaire de l'attribut clé étrangère et de la clé primaire référencée.

Outre la simplicité et l'amélioration des performances, dues à l'utilisation du modèle de données relationnel, la normalisation d'un langage tel que le langage SQL, facile d'utilisation , a contribué à la prolifération des bases de données relationnelles. Ainsi, jusqu'à présent, la plupart des applications développées, et ceci depuis plus d'une décennie, sont des applications conçues pour être exploitées par des systèmes de gestion de bases de données relationnelles. Mais la tendance actuelle est plutôt d'évoluer vers la conception d'applications utilisant des technologies orientées objet. Néanmoins, ces deux techniques doivent pouvoir cohabiter et les bases de données relationnelles existantes continuer d'être exploitées dans les divers systèmes, ce qui pose le problème de l'accès des applications développées dans des environnements orientés objet auxdites bases de données relationnelles. Par conséquent, il devient indispensable et urgent de trouver une solution rationnelle et efficace à ce problème d'accès.

Pour résoudre ce problème plusieurs solutions ont été proposées dont les deux suivantes.

La première solution (appelée "embedded SQL" par l'homme du métier) consiste à inclure des requêtes SQL dans le programme objet, comme cela est possible avec l'utilisation conjointe de système de gestion de bases de données relationnelles et de langage de programmation classique, la correspondance des types de données étant alors réalisée par le programmeur. Mais l'inconvénient de cette solution est qu'elle est très lourde à mettre en oeuvre pour le programmeur d'application et donc très peu praticable car elle suppose de sa part une connaissance parfaite du langage SQL, du modèle relationnel, du schéma de la base de données et des mécanismes spécifiques du système de gestion de la base de données comme, par exemple, la manipulation des curseurs et la conversion de données. Outre l'écriture de la correspondance des types de données, le programmeur doit également prendre en charge la correspondance entre les entités de la base de données relationnelle et les objets de l'application objet.

La seconde solution consiste à créer des classes génériques permettant de représenter des concepts relationnels dans le monde objet (classe "table", classe "n-uplet", etc.), ces classes permettant de faciliter la manipulation des données relationnelles. Cette solution a également pour principal inconvénient d'être lourde à mettre en oeuvre, en effet, le programmeur doit encore posséder une connaissance parfaite du modèle relationnel et du schéma de la base de données, seuls les aspects tels que la gestion de la correspondance des types ou des curseurs lui sont épargnés. La mise en oeuvre de cette solution consiste à fournir au programmeur une bibliothèque de classes génériques servant d'interface pour le système de gestion de la base de données relationnelle, il doit en outre prendre en charge la correspondance entre les entités de la base de données relationnelle et les objets de l'application objet. Une telle solution est décrite par Doug Wright dans "Designing a relational database interface in C++", Object Magazine, Vol.4 (No.2), pages 55 et 56, Mai 1994.

La présente invention a pour but de remédier aux divers inconvénients présentés par les solutions connues et propose un dispositif de génération d'interfaces orientées objet dont la conception est telle que les données relationnelles puissent être manipulées aisément et de manière transparente par le programmeur objet.

Pour cela, le dispositif de génération d'interfaces orientées objet mentionné dans le préambule est remarquable en ce qu'il crée, selon un procédé de génération d'interfaces orientées objet et à partir du schéma de la base de données relationnelle, un schéma objet qui constitue une vue orientée objet de la base de données relationnelle existante, cette vue, constituant l'interface orientée objet, étant composée d'un jeu de classes représentant les entités stockées dans la base de données, l'entrée du dispositif de génération d'interfaces se voyant appliquer la description de la base de données dans un langage standard de définition et de manipulation de données.

Par analogie et pour une meilleure appréhension, sachant qu'une vue objet est comparable à une vue relationnelle et sans pour autant que cette dernière soit utilisée, il est bon de rappeler que la notion de vue, connue dans le domaine relationnel, a été introduite afin de permettre à un utilisateur de manipuler les données autrement qu'à travers les tables définies dans la base. Une vue est alors une perception particulière des données d'une ou de plusieurs tables, elle est stockée sous forme de requête de sélection dans le dictionnaire de données. En fait, une vue est une table virtuelle, c'est-à-dire une collection n'ayant pas d'existence physique, c'est un objet dont la définition dérive de celles de tables et/ou d'autres vues et qui peut être considéré comme l'évaluation d'une requête de la base. Ainsi, selon l'invention, la solution consiste à proposer au programmeur une vue orientée objet de la base de données à accéder, les classes fournies étant représentatives des entités propres à l'application dans la base de données, par exemple des "personnes" à la place des "tables" ou des "n-uplets", par comparaison ici avec la seconde solution, précédemment citée, consistant à fournir des classes génériques. Ceci revient à dire qu'il est proposé au programmeur une interface d'accès au système de gestion de base de données, interface qui est spécifique de l'application et donc de la base de données à accéder, une telle interface devant être construite pour chaque base de données. Pour cela un dispositif de génération, appelé aussi générateur, doit donc être utilisé pour produire les interfaces pour la base de données relationnelle, le dispositif de génération recevant en entrée une description de la base de données. Autrement dit, le dispositif de génération permet, à partir du schéma relationnel ou d'une description de plus haut niveau, de générer une interface orientée objet pour l'accès aux données de ce schéma, la vue constituant l'interface étant composée d'un jeu de classes représentant les entités logiques du schéma de données et mettant en oeuvre l'accès à ces données. Ainsi, grâce à l'invention, il n'est pas nécessaire au programmeur d'avoir la connaissance des concepts relationnels, seule la connaissance des entités propres à l'application stockées dans la base de données est utile.

En outre, le dispositif de génération d'interfaces orientées objet selon l'invention est remarquable en ce que pour la gestion d'objets en mémoire et la manipulation de jeux d'objets, il crée une classe générique appelée classe collection qui permet d'explorer un jeu d'instances d'une classe ou les instances correspondant à des critères de sélection, cette classe collection, pour permettre un accès rapide aux données, encapsulant des mécanismes du système de gestion de la base de données relationnelle, tels que les curseurs, de telle sorte que les données relatives aux objets en mémoire sont gérées par le système de gestion de la base de données lui-même.

En effet, de manière générale, une requête peut retourner un ensemble de lignes dont le nombre est inconnu avant l'exécution. Pour résoudre ce problème, les systèmes relationnels proposent d'utiliser une zone de travail appelée curseur et permettant de sélectionner (attribuer des valeurs aux variables hôtes) une à une les lignes vérifiant une condition donnée. Ce curseur correspond donc à une zone mémoire dont la taille est fixée de façon dynamique pendant l'exécution du programme et contient la totalité des lignes sélectionnées permettant ainsi la sélection d'un ensemble de lignes sans toutefois connaître au préalable le nombre de lignes sélectionnées. Un curseur est associé à une requête, dans un même programme, il peut y avoir autant de curseurs que de requêtes, mais tous ces curseurs doivent porter des noms distincts. Ainsi, selon l'idée de l'invention, plutôt que de récupérer plusieurs objets et de les créer tous à la fois, il est créé une classe générique collection qui permet d'encapsuler les curseurs du système de gestion de bases de données relationnel. Les objets sont alors créés au fur et à mesure du parcours de la collection bien que tous verrouillés dans la base de données relationnelle, même s'ils ne sont pas créés en mémoire objet. L'encapsulation de ces mécanismes classiques d'accès aux bases de données relationnelles, permet, de manière très avantageuse, de conserver des performances équivalentes à celles d'une applicaton classique, écrite dans un langage classique utilisant l'inclusion de requêtes SQL ("embedded SQL", précédemment évoqué). En effet, reconstituer de tels mécanismes côté objet, mécanismes déjà offerts par tout système relationnel, impliquerait une réduction très significative des performances obtenues. En outre, l'encapsulation de ces mécanismes permet d'éviter d'avoir à mettre en oeuvre la gestion des données en mémoire, cette dernière étant déjà réalisée par lesdits mécanismes encapsulés.

De manière préférée, la classe collection créée comporte deux attributs privés ainsi que deux méthodes publiques, une méthode de création d'instances de classes qui n'est utilisée qu'occasionnellement et une méthode de parcours de la collection qui permet de récupérer un par un les objets de la collection, la méthode de création d'instances de classes prenant comme paramètre d'entrée une requête en langage standard de définition et de manipulation de données que l'utilisateur désire lancer, exécutant cette requête et récupérant l'identificateur du curseur contenant les n-uplets répondant aux critères de la requête alors que, s'il est désiré effectivement créer les objets correspondant à la requête, la méthode de parcours de la collection est lancée pour la collection récupérée, les objets étant alors créés un par un.

Il est à préciser ici, que selon l'invention, la méthode de création d'instances de classes n'est utilisée bien sûr que de manière exceptionnelle (voir exemple décrit dans la suite).

Egalement, de manière caractéristique, le dispositif de génération d'interfaces orientées objet selon l'invention, pour autoriser la gestion de transactions, d'une part comporte une classe appelée administrateur de base de données qui met en oeuvre quatre méthodes pour la réalisation des fonctions respectivement de validation d'une transaction, d'annulation d'une transaction, de connexion au système de gestion de bases de données relationnel et enfin de déconnexion dudit système de gestion de bases de données relationnel et d'autre part crée, pour chaque classe représentant une table relationnelle, une table contenant d'un côté les identificateurs des objets présents en mémoire, un identificateur d'objet étant une clé primaire qui identifie l'objet correspondant en relationnel, et de l'autre les adresses desdits objets, ces tables étant mises à jour par les méthodes utilisées pour la création ou la suppression d'un objet, alors que pour chaque classe, une classe table propre au nom de la classe est générée pour la mise en oeuvre de ces méthodes réalisant les fonctions de gestion de la mémoire et contenant la description de la table répertoriant les objets présents en mémoire, une telle gestion permettant ainsi de ne charger qu'une fois la même entité relationnelle en objet.

Concernant la manipulation de données, de manière plus générale, pour qu'une application puisse accéder aux données relationnelles stockées dans la base de données relationnelle, il est nécessaire d'effectuer des copies temporaires de données relationnelles en données objet. Ces copies ne concernent que les n-uplets participant au traitement de l'application objet. Le chargement des données passe par une phase d'accès auxdites données dans la base de données relationnelle pour récupérer les n-uplets correspondant aux critères d'une requête, puis par une phase de gestion de la concurrence d'accès à la ressource et enfin par une phase de traduction en données objet des n-uplets récupérés. La gestion de la concurrence d'accès en relationnel est effectuée par l'intermédiaire du verrouillage des données, qui est implicite et est réalisé suivant le type de traitement. Chaque ordre de lecture d'une donnée entraîne la pose d'un verrou partagé sur les données recherchées et chaque ordre de mise à jour entraîne la pose d'un verrou exclusif sur les données. Cependant, il est possible de forcer la pose d'un verrou exclusif lors d'une lecture, c'est ce qui est fait pour le chargement des données dans le monde objet, ceci permet d'assurer que les données ne sont pas périmées à la fin du traitement en objet puisqu'il n'est plus possible de les modifier pendant ce temps dans l'environnement relationnel. En ce qui concerne plus particulièrement la gestion des transactions, il est nécessaire de pouvoir libérer les ressources utilisées lors d'une transaction et de déclencher la mise à jour sur disque. Pour gérer les ressources dans l'application objet, il est utilisé d'un côté des méthodes de gestion de la base de données relationnelle et de l'autre des méthodes de gestion de la mémoire objet. Ainsi, selon l'idée de l'invention, il faut permettre à l'application objet d'utiliser certaines fonctions de gestion de données. Pour cela, il est créé d'un côté, pour permettre de gérer la base de données relationnelle, une classe administrateur de base de données qui met en oeuvre quatre méthodes pour la réalisation des fonctions suivantes:
- une fonction de validation de la transaction qui, entre autres, doit mettre à jour la base de données relationnelle, libérer les ressources et vider la mémoire des objets utilisés pendant le traitement,
- une fonction d'annulation de la transaction qui permet de défaire toutes les mises à jour effectuées depuis la dernière validation et qui vide également la mémoire objet,
- une fonction de connexion au système de gestion de bases de données relationnel demandant, en outre, pour être réalisée, le mot de connexion et le mot de passe de l'utilisateur, l'ouverture de la base de données relationnelle étant implicite.,
- une fonction de déconnexion du système de gestion de bases de données relationnel, la fermeture de la base de données relationnelle étant également implicite.

De même, de l'autre côté, sont utilisées des méthodes de gestion de la mémoire objet. En effet, il faut pouvoir vider l'espace mémoire utilisé par les objets après chaque transaction, car une fois que la transaction est terminée côté relationnel, les verrous sont relâchés et les données en mémoire objet ne sont plus valides. Pour cela il est nécesssaire de créer des classes supplémentaires où seront stockées les données utiles à cette réinitialisation ainsi que les méthodes de gestion de la mémoire de travail. Les objets déjà présents en mémoire doivent être connus pour éviter de les dupliquer à chaque accès, ce qui permet de préserver la cohérence en mémoire mais également dans la base de données relationnelle. L'invention propose, pour permettre de gérer efficacement cette cohérence, de créer, pour chaque classe représentant une table relationnelle, une table contenant d'un côté les identificateurs (clé du n-uplet correspondant) des objets présents en mémoire et de l'autre côté les adresses desdits objets, ces tables étant mises à jour par les méthodes utilisées pour la création ou la suppression d'un objet. Il faut alors déterminer la durée de vie des tables, c'est-à-dire savoir quand les créer et quand les détruire. Il est possible, au démarrage de l'application de créer statiquement une table par classe, mais cette solution a pour principal inconvénient d'imposer une consommation excessive de mémoire. Une solution dynamique est nettement préférable, dans laquelle chaque classe contient une variable statique indiquant si la table de présence est ou n'est pas créée, cette solution permettant de limiter le nombre de tables en mémoire au nombre de classes utilisées pour une transaction donnée. Pour chaque classe, une classe table propre au nom de la classe va être générée où seront mises en oeuvre les fonctions de gestion de la mémoire ainsi que la description de la table répertoriant les objets présents en mémoire. Pour cela, de manière caractéristique, différentes méthodes de gestion sont nécessaires. Une première méthode permettant de savoir si l'objet correspondant à la clé passée en paramètre est déjà présent en mémoire, si il y est, il est dans ce cas inutile de le recréer il faut simplement récupérer son adresse. Une seconde méthode permettant de répertorier ledit objet comme étant présent en mémoire. Enfin une troisième méthode permettant, en cas de destruction dudit objet de le supprimer de la liste des objets présents en mémoire. Ainsi, avec le langage C++, pour retrouver l'instance de la classe table propre au nom de la classe C dont elle dépend, ladite classe C contient un pointeur sur cette instance de classe table, pointeur qui est déclaré en variable statique. De plus, chacune de ces classes table est une classe héritée d'une classe table principale, ceci permet de stocker les adresses des instances des classes table dans un tableau d'objets, puis de parcourir celui-ci pour lancer, pour chaque instance de classe table, l'appel d'une méthode de remise à zéro de la mémoire objet concernant les objets instances de cette classe, cela afin de désallouer la mémoire lorsqu'une fonction de validation ou d'annulation d'une transaction est mise en oeuvre. La méthode de remise à zéro de la mémoire objet, définie sur une classe table, parcourt cette table pour détruire tous les objets référencés sans bien sûr détruire les données relationnelles correspondantes. Cette méthode de remise à zéro n'est pas mise en oeuvre au niveau de la classe table principale puisqu'elle y est définie de façon abstraite, lors du parcours du tableau, c'est la méthode de remise à zéro de la mémoire objet propre à une classe table qui est activée.

De manière remarquable, le procédé de génération d'interfaces orientées objet mis en oeuvre par le dispositif de génération d'interfaces selon l'invention permet, en passant par différentes phases, de créer le schéma objet à partir du schéma relationnel en traduisant systématiquement d'une part les tables relationnelles en classes et d'autre part les liens relationnels entre lesdites tables, exprimés au moyen de clés étrangères, en liens entre objets représentés par des méthodes, générant pour cela, dans une première phase d'analyse lexicale et syntaxique, l'arbre syntaxique décrivant le schéma relationnel à partir du langage standard de définition et de manipulation de données, puis dans une seconde phase parcourant, une première fois, ledit arbre pour repérer toutes les tables de jointure, c'est-à-dire les tables n'ayant pour attributs que des clés étrangères, ensuite dans une troisième phase, parcourant l'arbre une seconde fois, pour générer une classe pour chaque table qui n'est pas une table de jointure, alors que pour chaque clé étrangère d'une telle table sont générées des méthodes de gestion de lien et que pour chaque table de jointure concernant ladite table sont également générées les méthodes de lien correspondant à la classe de ladite table.

Ainsi, selon ce procédé, le dispositif de génération d'interfaces va, à partir de la description de la base de données dans le langage standard de définition et de manipulation de données qu'il se voit appliquer en son entrée, dans la première phase d'analyse lexicale et syntaxique construire l'arbre syntaxique qui est la description du schéma conceptuel, cet arbre représentant l'expression écrite dans le langage, par exemple SQL, de définition et de manipulation de données. Une fois l'arbre ainsi construit, ce dernier est parcouru deux fois au moyen d'algorithmes de parcours classiques. Une première fois pour retrouver les tables de jointure sachant que les tables de jointure sont les tables qui n'ont comme attributs que des clés étrangères, ces tables ne seront pas traduites selon des classes mais seront ensuite utilisées pour générer des méthodes de lien sur les entités engendrées. Puis l'arbre est parcouru une seconde fois pour récupérer les autres tables qui ne sont donc pas des tables de jointure et générer pour chacune de ces tables une classe, à chaque table correspond ainsi une classe. Outre les méthodes de lien générées à partir des tables de jointure correspondant à une classe déterminée, une méthode de lien est aussi engendrée pour chaque clé étrangère d'une table qui n'est pas une table de jointure. Il peut être ajouté cependant que, pour les tables qui ne sont pas des tables de jointure mais qui comportent plus d'un attribut clé étrangère, il est, dans ce cas, généré une classe en même temps que sont générées, sur les classes référencées des méthodes de lien.

La description suivante en regard des dessins annexés, le tout donné à titre d'exemple non limitatif, fera bien comprendre comment l'invention peut être réalisée.
La figure 1 présente de manière schématique l'environnement du dispositif de génération d'interfaces orientées objet.
La figure 2 propose un exemple appliqué de génération de classes à partir d'un schéma relationnel.

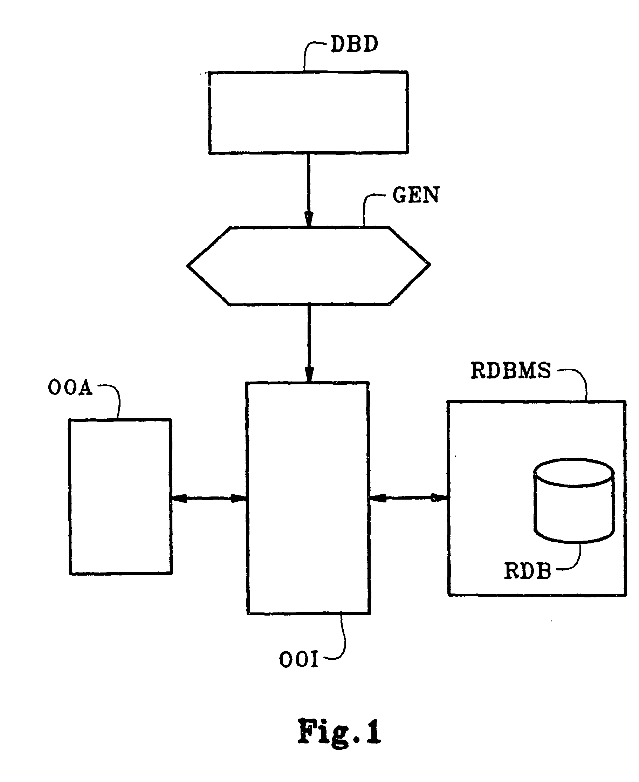

La description et la lecture de la figure 1 permettent d'énoncer les principes généraux du dispositif de génération d'interfaces orientées objet GEN conçu pour autoriser l'accès de nouvelles applications OOA développées dans des environnements orientés objet à des bases de données relationnelles existantes RDB gérées par un ou des systèmes de gestion de bases de données relationnels RDBMS. De manière caractéristique, le dispositif de génération d'interfaces GEN crée, selon un procédé de génération d'interfaces orientées objet et à partir du schéma de la base de données relationnelles RDB, un schéma objet qui constitue une vue orientée objet de la base de données relationnelle existante RDB, cette vue, constituant l'interface orientée objet 001, étant composée d'un jeu de classes représentant les entités stockées dans la base de données. Ce jeu de classes constitue en fait l'interface d'accès au système de gestion RDBMS utilisée par l'application OOA. L'interface OOI offre ainsi un jeu de fonctions de manipulation et d'accès aux données telles que la manipulation de collection d'objets, la création, la suppression ou la mise à jour d'un objet, l'accès simple à une donnée, l'accès à une donnée ou la navigation par l'intermédiaire d'un lien relationnel. L'interface OOI autorise également la gestion de transactions en usant des mécanismes connus propres aux systèmes de gestion de bases de données relationnels. A l'entrée du dispositif de génération d'interfaces GEN est appliquée la description de la base de données RDB dans un langage standard de définition et de manipulation de données, par exemple dans le langage SQL, les définitions des tables de la base de données étant explorées à l'aide dudit langage. Selon le procédé conforme à l'invention, le schéma objet est créé à partir du schéma relationnel en appliquant de manière systématique les règles de traduction suivantes. Toute table relationnelle est traduite en classe et tout lien relationnel entre les tables, exprimé au moyen de clés étrangères, est traduit en lien entre objets représenté par des méthodes et notamment, des méthodes de création de lien, de suppression de lien et de parcours de lien. Par conséquent, les tables de jointure, utilisées pour exprimer les liens relationnels, ne sont donc pas traduites en classes. De manière générale, différents types de liens relationnels peuvent être représentés dans un schéma relationnel, ils peuvent avoir différentes cardinalités (1-1, 1-n, n-m) ou propriétés associées, la cardinalité dépendant des contraintes d'unicité déclarées dans les clés étrangères (l'attribut clé étrangère pouvant être défini "unique", pouvant être une clé primaire,etc.).

Ainsi, selon l'invention, il n'est pas mis en oeuvre un langage objet, tel qu'un SQL objet, mais l'accès aux données est avantageusement réalisé par des méthodes dans les classes générées. Il est à noter que le dispositif de génération d'interfaces ne va pas transformer la base relationnelle en base objet. En fait, les données relationnelles sont traduites en objet au fur et à mesure que l'application utilisateur se déroule: lorsque cette dernière demande une donnée, celle-ci est traduite en objet, seules les données participant au traitement étant traduites. De plus, afin d'assurer la cohérence entre le monde relationnel et le monde objet, les données sont verrouillées en relationnel dès qu'elles sont utilisées par l'application. Il est également nécessaire de contrôler la non-duplication des données relationnelles en objet afin d'assurer, là aussi, la cohérence entre ces deux mondes. De cette manière, lorsque selon l'application il est désiré accéder à une donnée, avant de la traduire en objet, il est vérifié que cette dernière n'a pas déjà été traduite.

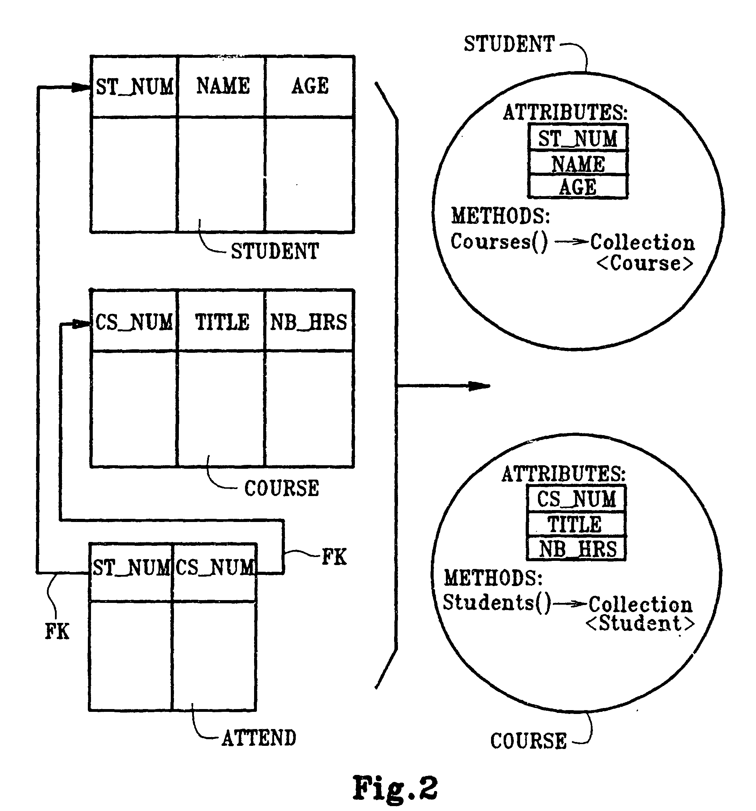

La figure 2 permet d'illustrer un exemple appliqué, très simple, de génération de classes à partir d'un schéma relationnel et en particulier de montrer comment les tables relationnelles standards sont traduites en classes alors que les tables de jointure sont traduites en méthodes représentant les liens relationnels. Sur la figure, trois tables relationnelles sont représentées, elles permettent de répertorier des étudiants, des cours proposés aux étudiants ainsi que la fréquentation des étudiants à ces cours. Une première table STUDENT relative aux étudiants comporte trois colonnes renfermant chacune respectivement, le numéro identifiant l'étudiant ST_NUM qui est une clé primaire, le nom de l'étudiant NAME et enfin l'âge de l'étudiant AGE. Cette table est traduite en une classe STUDENT comportant trois attributs ATTRIBUTES correspondant aux colonnes de la table traduite. Une seconde table COURSE relative aux cours comporte elle aussi trois colonnes renfermant chacune respectivement, le numéro identifiant le cours CS_NUM qui est une clé primaire, l'intitulé du cours TITLE et le nombre d'heures dispensées pour ce cours NB_HRS. Cette table est traduite en une classe COURSE comportant trois attributs ATTRIBUTES correspondant aux colonnes de la table traduite. Une troisième table ATTEND relative à la fréquentation de ces cours par les étudiants comporte deux colonnes renfermant respectivement, le numéro identifiant l'étudiant ST_NUM et le numéro identifiant le cours CS_NUM qui sont des clés étrangères FK correspondant aux clés primaires de même désignation, cette table étant typiquement une table de jointure car elle ne contient que des clés étrangères, chaque n-uplet représentant un lien relationnel entre un étudiant et un cours. Cette table n'est donc pas traduite en une classe mais en méthodes METHODS dans les classes qu'elle référence, dans la classe STUDENT par une méthode Courses() renvoyant une collection de cours Collection<Course> et dans la classe COURSE par une méthode Students() renvoyant une collection étudiant Collection<Student>. Un tel schéma relationnel peut être représenté comme suit, en utilisant, par exemple, le langage SQL comme langage de définition et de manipulation de données:

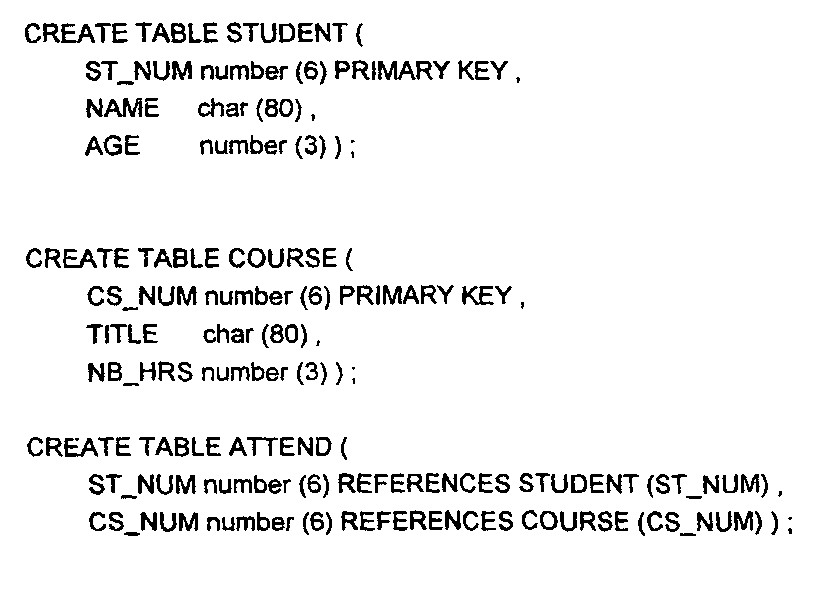

En outre, relativement à la détermination de la cardinalité, le fait qu'aucune contrainte d'unicité ne soit définie sur les attributs de la relation propre à la fréquentation des cours ATTEND signifie que la cardinalité du lien relationnel est d'ordre n-m, c'est-à-dire qu'un étudiant peut fréquenter plusieurs cours et qu'un cours peut être fréquenté par plusieurs étudiants. Si, par contre, l'attribut ST_NUM de la relation ATTEND etait déclaré comme "unique", ou comme une clé primaire, la cardinalité du lien relationnel serait d'ordre 1-n, ce qui signifie qu'un étudiant ne peut fréquenter qu'un seul cours, car il ne peut apparaître qu'une seule fois dans la table ATTEND, alors qu'un cours peut être fréquenté par plusieurs étudiants. Dans ce cas, la méthode Courses() de la classe STUDENT générée ne pourrait renvoyer une collection de cours, mais un seul cours.

La figure 2 montre donc une partie de l'interface des classes générées et mises en oeuvre par le dispositif de génération d'interfaces GEN, cette mise en oeuvre autorisant l'accès véritable au système de gestion de bases de données RDBMS. Chaque classe générée contient un jeu de méthodes communes, certaines sont applicables à la classe, c'est-à-dire au jeu de toutes les instances, alors que d'autres sont applicables aux objets, c'est-à-dire aux instances. Pour la génération d'interfaces selon l'invention, les méthodes de classe sont représentées, notamment en langage C++, par des fonctions statiques telles que par exemple les méthodes de création ou les méthodes de recherche ou d'interrogation qui permettent d'obtenir un objet, connaissant sa clé, ou d'obtenir un jeu d'objets en utilisant quelques critères de sélection simples. Les méthodes directement applicables aux objets sont propres à des opérations de suppression ou de mise à jour. Un exemple de classe générée (utilisant le langage C++) pour la table STUDENT décrite précédemment est donné ci-après:

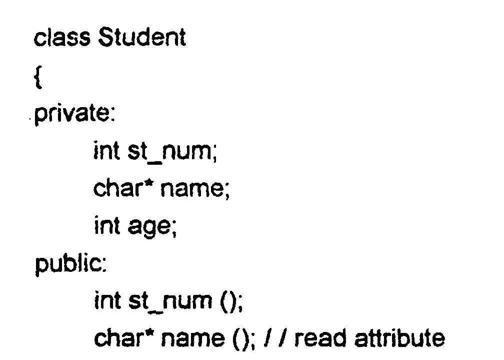

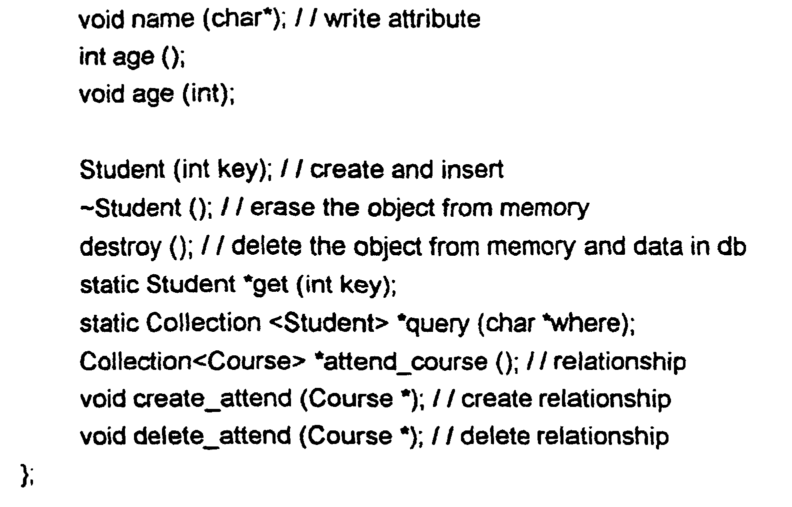

Comme cela vient d'être vu dans cet exemple, un ensemble d'opérations pour la manipulation et l'accès aux données est donc prévu et proposé avec l'interface orientée objet ainsi générée. Ainsi, pour mieux appréhender les opérations effectuées dans cet exemple, suivent quelques précisions relativement aux méthodes employées.

La méthode de création, qui, à la fois crée un objet et insère les données correspondantes dans la base de données (la clé de l'objet et éventuellement les paramètres d'initialisation étant entrés), est en fait, selon le langage C++ utilisé dans le présent exemple, le constructeur de la classe générée. Dans l'exemple précédent, le constructeur, qui est donc la méthode de création d'instances de classe, prend comme paramètre la clé de l'entité étudiant qui est le numéro de l'étudiant:
Student (int key);

La méthode de suppression, à la fois supprime un objet et l'entité correspondante dans la base de données, elle correspond à la méthode "destroy" utilisée dans l'exemple précédent:
destroy() ;// delete the object and data in db
~Student () ; // erase the object from memory (et seulement de la mémoire)

Le destructeur "~Student" est principalement utilisé de manière interne, cependant il est disponible pour le programmeur qui désire gérer l'allocation ou la "désallocation" de la mémoire, sachant que la suppression de l'objet dans la mémoire n'affecte pas et n'annule donc pas une modification qui pourrait être réalisée sur l'entité pendant une transaction, le destructeur ne supprimant l'objet que dans la mémoire.

Deux méthodes d'interrogation et de recherche sont générées pour chaque classe, la méthode "get" retourne un objet connaissant sa clé alors que la méthode "query" retourne un jeu d'objets dont les attributs satisfont à des critères simples.
static Student *get (int key);
static Collection<Student> *query (char *where);

Les mises à jour sont exécutées au moyen de méthodes associées aux attributs, ce sont les méthodes de lecture et d'écriture des attributs, les méthodes d'écriture des attributs propageant vers la base de données les modifications effectuées sur les objets. Dans la version C++ courante, le programmeur ne manipule pas directement les attributs, aussi des méthodes associées doivent être utilisées. Il n'y a pas de méthode de mise à jour des attributs propres aux clés puisqu'ils identifient l'entité. Les méthodes de lecture et de mise à jour pour l'attribut "age" sont donc les suivantes.
int age () ; // read
void age (int); // write

Des méthodes de navigation au travers des liens relationnels sont également générées. Dans la classe Student générée, il y a ainsi une méthode pour naviguer au travers du lien relationnel "attend" (première ligne), une autre pour créer un lien relationnel entre l'objet courant "étudiant" et un objet "cours" (deuxième ligne) et une troisième pour supprimer une telle relation (troisième ligne).
Collection<Course> *attend_course ();
void create_attend (Course *);
void delete_attend (Course *);

La plupart de ces méthodes encapsulent des mécanismes de langage de définition et de manipulation de données tel que SQL, par exemple la méthode "attend_course "est mise en oeuvre en utilisant les mécanismes SQL suivants:
SELECT C.* FROM COURSE C, ATTEND A WHERE A.ST_NUM = st_num (de l'état de l'objet) AND A.CS_NUM = C.CS_NUM

Egalement, une classe générique "Collection" est utilisée pour manipuler des jeux d'objets, elle permet d'explorer le jeu d'instances d'une classe ou des instances correspondant à des critères de sélection. Cette classe, en fait, encapsule avantageusement les curseurs du système de gestion de bases de données RDBMS de telle manière que la mémorisation des données est faite par ledit système RDBMS et non pas faite au niveau objet. Les objets ne sont pas créés avant qu'une opération de recherche de type "fetch" ne soit demandée. Les collections résultent souvent de méthodes de type "query" ou de "navigation dans les liens relationnels".

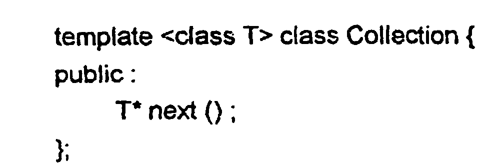

La gestion des transactions peut être explicitée également à l'aide du même exemple, en conservant en mémoire que le principe essentiel dans la présente invention tient à ce que le dispositif de génération GEN permet de fournir des interfaces objet pour accéder à des données existantes stockées dans un système de gestion de bases de données RDBMS et que les objets manipulés ne sont que des vues de données relationnelles. Ceci signifie que l'interface générée peut avantageusement s'appuyer sur les mécanismes des systèmes de gestion de bases de données tels que la gestion de transactions ou les curseurs simplement encapsulés par des collections.

Toutes les opérations effectuées sur les objets sont directement traduites en opérations relationnelles correspondantes et les données dans les tampons du système de gestion RDBMS sont la reproduction de l'état des objets dans la mémoire, ces objets n'étant que des vues de l'état de la base de données RDB. La véritable mise à jour de la base de données est obtenue au moyen de commandes du type "commit" et "abort" (correspondant respectivement à des fonctions de validation et d'annulation des transactions), déclenchées à partir de l'applicaition par l'intermédiaire d'une classe de gestion, appelée administrateur de base de données, créée pour la gestion de transactions. Ainsi, par exemple, toutes les opérations de création, suppression, modification sont directement propagées vers le système de gestion de bases de données mais ne sont validées que lorsqu'un ordre de validation de type "commit" est exécuté ou supprimées lorsqu'un ordre de suppression de type "abort" (ou "rollback", commande utilisée avec le système de gestion de base de données relationnel Oracle (marque déposée par Oracle Corporation)) est exécuté.

Cet aspect peut être particulièrement bien illustré par l'exemple suivant dans lequel la méthode de mise à jour de l'attribut AGE de la classe STUDENT est mise en oeuvre en utilisant une commande SQL du type "UPDATE":

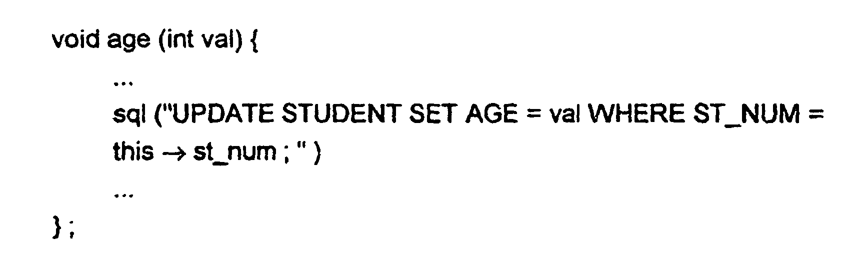

Les tables objet mémorisées sont maintenues de manière à éviter que des entités relationnelles soient chargées deux fois, une duplication pouvant générer des incohérences. Ces tables sont aussi utilisées pour vider la mémoire lorsqu'un ordre de validation de type "commit" est donné.

La méthode de type "commit" de la classe "administrateur de base de données" créée est mise en oeuvre par un ordre de type "commit" émis par le système de gestion RDBMS et un vidage de la mémoire. L'interface de cette classe "administrateur de base de données" est proposée ci-après:

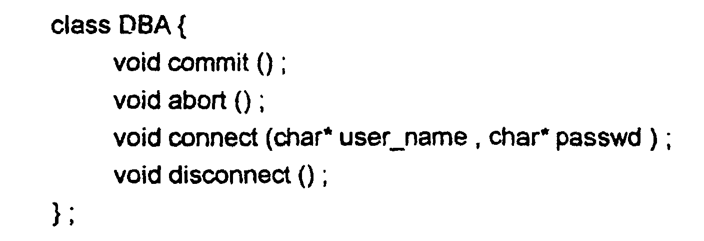

Avantageusement, le dispositif de génération d'interfaces orientées objet peut être utilisé en environnement centralisé ou bien en environnement distribué et dans ce dernier cas utilisé de manière remarquable comme composant d'accès à une base de données mettant en oeuvre le procédé de génération d'interfaces orientées objet pour d'une part générer les interfaces exprimées en langage de description d'interface des différentes classes et d'autre part générer un serveur à partir de ce composant.

Le dispositif de génération d'interfaces orientées objet ainsi que le procédé mis en oeuvre par ledit dispositif peuvent être ainsi utilisés avec et intégrés dans CORBA (Common Object Request Broker Architecture), dont l'architecture est spécifiée et publiée par l'OMG (Object Management Group) dans le document "The Common Object Request Broker: Architecture and specification", OMG Document Number 93.12.43, de décembre 1993.

Dans ce contexte, le jeu de classes C++ générées constitue en effet un composant d'accès orienté objet à une base de données qui peut être utilisé, dans un mode de type client serveur, par différents clients CORBA distants une fois que les interfaces IDL de langage de description d'interface des différentes classes sont générées et qu'un serveur CORBA est créé comme un jeu de classes à partir de ce composant. Pour cela, le jeu de classes C++, c'est-à-dire le serveur, et les interfaces IDL correspondantes sont créées simultanément. Ces interfaces IDL sont ensuite compilées par le compilateur IDL, fourni dans ce type d'environnement, et plus précisément avec l'ORB (Object Request Broker), pour obtenir les talons utilisés par le client (talons appelés "stubs" par l'homme du métier) et les squelettes pour construire le serveur.

La méthode habituelle pour construire un tel serveur CORBA est de définir les interfaces IDL, de générer les squelettes au moyen du compilateur IDL et ensuite de compléter ces squelettes, de manière manuelle c'est-à-dire en écrivant pour mettre en oeuvre les objets correspondant aux squelettes générés. L'approche est tout à fait différente selon l'invention, parce que la mise en oeuvre du serveur existe déjà du fait que le dispositif de génération d'interfaces a créé le jeu de classes C++ et que le langage IDL correspondant a ensuite été défini. De plus, les interfaces IDL générées diffèrent totalement des en-têtes C++, puisque les concepts de fonctions statiques et de types génériques n'existent pas dans le langage IDL de CORBA. Ceci signifie que pour chaque classe C++, par exemple pour la classe "Student" citée précédemment, trois interfaces IDL sont générées, une pour représenter la classe, contenant les fonctions statiques (classe Student), une pour représenter un objet avec les fonctions non statiques (Student) et une pour représenter les collections d'objets de cette classe, généralement retournées par les fonctions de navigation dans les liens relationnels ou les fonctions de type "query" (CollectionStudent). Les squelettes du serveur correspondent à ces interfaces IDL et sont mis en oeuvre simplement par encapsulation des appels vers les classes générées par le dispositif de génération d'interfaces. Les interfaces IDL générées par le dispositif selon l'invention correspondant à la classe "Student" sont les suivantes:

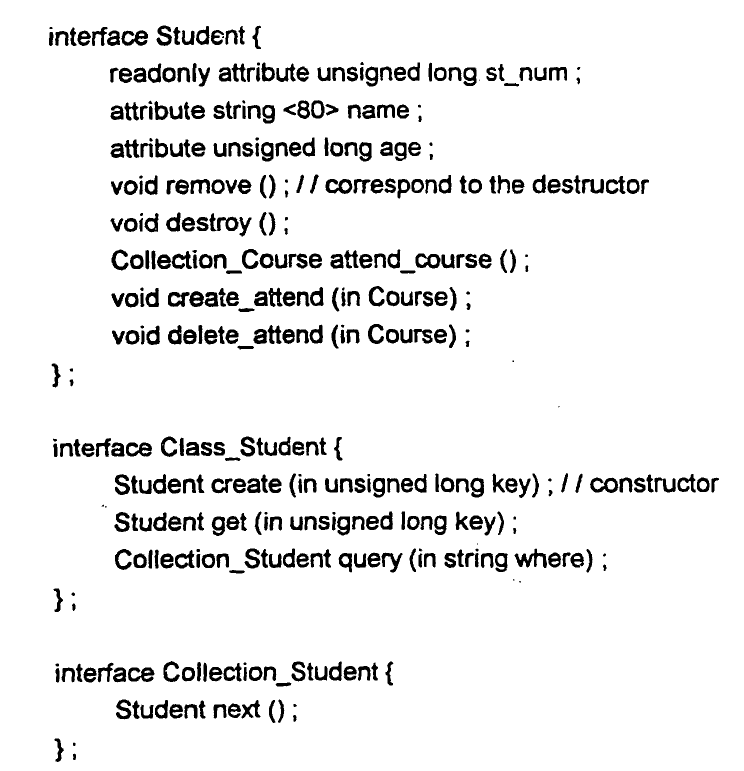

L'intégration avec des services de transactions d'objets peut être également réalisée, en particulier avec OTS (Object Transaction Service) de CORBA. En effet, la plupart des systèmes de gestion de bases de données founissent les interfaces adéquates, par exemple le système Oracle, fournit l'interface XA du modèle de traitement de transactions distribué (Distributed Transaction Processing Model de X/OPEN) et peut être utilisé comme gestionnaire de ressources par OTS.

En résumé, la présente invention permet de combiner les avantages reconnus d'une technologie relative à la gestion de bases de données relationnelles avec la technologie émergente orientée objet, à présent bien acceptée, en faisant coopérer et même en intégrant, de manière simple et efficace, ces deux environnements.

Pour conclure, le dispositif de génération d'interfaces orientées objet ici revendiqué fournit avantageusement un accès orienté objet à toute base de données relationnelle existante, en permettant de créer, supprimer, lire et mettre à jour les données. A partir du schéma relationnel, un jeu de classes est généré pour créer une interface, facilitant ainsi l'accès aux données. Ces classes peuvent être utilisées localement par une quelconque application ou dans un environnement distribué comme serveur auquel un client éloigné peut accéder au travers d'un réseau et en particulier un client CORBA au travers de l'ORB.

Un programmeur développant une application orientée objet qui désire utiliser les bases de données relationnelles bénéficie, grâce à l'invention, des avantages suivants:
- la phase de traduction conceptuelle des objets à partir des tables est considérablement simplifiée,
- habituellement, l'accès à une base de données relationnelle à partir de n'importe quel langage de programmation implique obligatoirement le développement très lourd et fastidieux d'un code pour gérer les curseurs, la correspondance des types et les variables. Tout ceci est selon l'invention automatiquement généré avec la mise en oeuvre des classes de l'interface,
- le programmeur de l'application n'a pas à se poser les problèmes propres à la logique d'accès aux données, il doit seulement se consacrer à la logique de l'application. Il ne rencontre pas non plus les problèmes de cohérence des données lors de la mémorisation des données (verrous, duplication, etc.), ces derniers étant automatiquement pris en charge par le gestionnaire d'objets mémorisés qui est fourni avec le dispositif selon l'invention,
- le programmeur de l'application n'a besoin de connaître qu'un modèle, le modèle objet, et un langage (pas de "embedded SQL" par exemple).

Comme le processus de génération est automatisé, le dispositif de génération d'interfaces selon l'invention peut être intégré dans un quelconque environnement CASE (Computer Aided Software Engineering).

Un autre avantage inhérent à l'invention est que l'accès à des bases de données relationnelles peut être réalisé sans qu'il soit besoin de faire migrer la base de données dans un nouveau système de gestion de bases de données ni de modifier la base de données. De plus, l'accès de nouvelles applications orientées objet est autorisé conjointement avec d'anciennes applications existantes, puisque la gestion des objets repose sur des mécanismes transactionnels des systèmes de gestion de bases de données relationnels.

Ce dispositif de génération d'interfaces peut également être utilisé lors de la conception de nouvelles bases de données. Pour des applications dans lesquelles le stockage relationnel est plus approprié, il est possible de concevoir d'abord le schéma de la base de données relationnelle en utilisant une méthodologie basée sur les données et ensuite, d'obtenir automatiquement les classes utilisées pour accéder et manipuler les données. La partie dynamique de l'application peut alors être conçue en utilisant une méthodologie orientée objet.

De même, en concevant le dispositif selon l'invention, l'option prise était de ne pas développer un langage de requête orienté objet de type SQL et ceci pour les raisons suivantes:
- il aurait été alors nécessaire d'intégrer ce langage dans le langage de programmation,
- la plupart des requêtes complexes d'interrogation ou de recherche, c'est-à-dire celles impliquant plus d'une table, dans les applications relationnelles, sont formulées dans le but de naviguer au travers des tables de jointure, de telles requêtes sont prédéfinies dans les méthodes de liens relationnels générées,
- en outre, les standards dans ce domaine ne sont pas clairement établis.

Il a été plutôt préféré d'utiliser des fonctions simples et bien intégrées avec les classes générées.

Egalement, relativement à l'entrée du dispositif de génération d'interfaces, il est possible de faire le choix entre deux solutions. Une première solution consiste à considérer le modèle conceptuel de la base de données qui est habituellement décrit en utilisant un modèle entité-association représentant les entités de l'application ensemble avec les liens en rapport avec les entités. Une seconde solution et c'est celle qui a été choisie, consiste à prendre comme entrée le schéma même de la base de données relationnelle, en général représenté en utilisant le langage de définition et de manipulation de données. Il a été opté pour cette seconde solution pour différentes raisons. Une première raison est qu'il n'y a pas de représentation standard d'un modèle conceptuel (même d'un modèle entité-association) qui puisse être utilisé comme entrée. Ensuite, le modèle conceptuel ne contient pas d'informations relatives au stockage physique, c'est-à-dire dans lesquelles les tables sont les données, ce qui est nécessaire pour générer l'interface d'accès. De plus, l'introduction de contraintes d'intégrité référentielles dans un langage de type SQL offre un moyen standard de représenter les associations dans un schéma relationnel. Enfin, le langage de définition et de manipulation de données de type SQL avec des contraintes d'intégrité référentielles telles que les clés étrangères est une description d'entrée standard d'une base de données relationnelle.

Enfin la conception du dispositif conforme à l'invention permet avantageusement d'envisager les perspectives suivantes:
- la possibilité de générer des interfaces orientées objet à partir de vues relationnelles, ce qui permettrait de créer des interfaces personnalisées pour un client déterminé, directement adaptables aux besoins de l'application. Ceci présente un intérêt évident pour ce qui concerne la génération d'objets mettant en oeuvre l'accès à une base de données relationnelle, à partir de la description de la correspondance entre les structures de données de tels objets et une requête de type SQL,
- le développeur d'applications orientées objet peut également s'intéresser au stockage des nouveaux objets définis dans l'application dans le système de gestion de bases de données relationnel, ainsi le dispositif de génération d'interfaces pourrait être utilisé pour, de plus, fournir la fonctionnalité inverse, c'est-à-dire générer un stockage relationnel à partir d'un schéma orienté objet. Ceci signifie qu'il faut générer le schéma relationnel correspondant ainsi que la mise en oeuvre des classes qui font usage dudit schéma relationnel pour réaliser ledit stockage. Les règles de traduction et les classes générées dans ce cas, sont proches de celles définies et décrites précédemment, mais pourraient être légèrement plus complexes car le schéma orienté objet peut contenir des concepts additionnels tels que l'héritage d'objets,
- pour un réseau donné, en particulier pour un ORB donné, le serveur CORBA construit à partir des classes créées et correspondant à l'interface orientée objet pourrait être généré avec les définitions IDL.

## Revendications

1. Dispositif de génération (GEN) d'interfaces orientées objet (OOI) pour autoriser l'accès de nouvelles applications (OOA) développées dans des environnements orientés objet à des bases de données relationnelles (RDB) existantes, comprenant des moyens pour créer, selon un procédé de génération d'interfaces orientées objet (OOI) et à partir du schéma (DBD) des bases de données relationnelles (DBR), un schéma objet qui constitue une vue orientée objet des bases de données relationnelles (DBR) existantes, cette vue, constituant l'interface orientée objet (OOI), étant composée d'un jeu de classes représentant les entités stockées dans la base de données relationnelle (DBR), le dispositif comprenant des moyens permettant à l'entrée du dispositif de génération d'interfaces (GEN) de se voir appliquer la description de la base de données (DBD) dans un langage standard de définition et de manipulation de données, **caractérisé en ce que** ladite vue est aussi composée de liens entre objets, qui représentent les liens relationnels entre lesdites bases (DBR), représentés par des méthodes et que le dispositif comprend des moyens pour gérer les objets en mémoire et manipuler les objets, des moyens pour créer une classe générique (Collection) appelée classe collection qui permet d'explorer un jeu d'instances d'une classe ou les instances correspondant à des critères de sélection, pour permettre un accès rapide aux données, et qui encapsule des mécanismes du système de gestion de la base de données relationnelle (RDBMS), tels que les curseurs, de telle sorte que les données relatives aux objets en mémoire sont gérées par le système de gestion de la base de données (RDBMS) lui-même.

2. Dispositif de génération (GEN) d'interfaces orientées objet (OOI) selon la revendication 1, comprenant des moyens d'effectuer une analyse sémantique du schéma relationnel tenant compte de la présence ou non d'attributs et de clés, **caractérisé en ce qu'**il comporte des moyens de créer, en différentes phases, le schéma objet à partir du schéma relationnel (DBD) en traduisant systématiquement d'une part les tables relationnelles en classes et d'autre part les liens relationnels entre lesdites tables, exprimés au moyen de clés étrangères (FK), en liens entre objets représentés par des méthodes, générant pour cela, par des moyens d'analyse lexicale et syntaxique, l'arbre syntaxique décrivant le schéma relationnel à partir du langage standard de définition et de manipulation de données, puis des moyens de repérer, en parcourant l'arbre première fois, toutes les tables de jointure, c'est-à-dire les tables n'ayant pour attributs (ATTRIBUTES) que des clés étrangères (FK), puis des moyens de générer une classe pour chaque table qui n'est pas une table de jointure par un deuxième parcours de l'arbre, alors que pour chaque clé étrangère d'une telle table sont générées des méthodes de lien basées sur la création et l'utilisation de classes génériques (STUDENT, COURSE) pour la gestion de collections d'objets et que pour chaque table de jointure concernant ladite table sont également générées les méthodes de lien correspondant à la classe de ladite table.

3. Dispositif de génération (GEN) d'interfaces orientées objet (OOI) selon l'une des revendications précédentes, **caractérisé en ce que** la classe collection qu'il crée comporte deux attributs privés (ATTRIBUTES) ainsi que deux méthodes publiques (METHODS), une méthode de création d'instances de classes et une méthode de parcours de la collection qui permet de récupérer un par un les objets de la classe collection, la méthode de création d'instances de classes prenant comme paramètres d'entrée une requête, en langage standard de définition et de manipulation de données, que l'utilisateur désire lancer, exécutant cette requête et récupérant l'identificateur du curseur contenant les n-uplets répondant aux critères de la requête alors que, s'il est désiré effectivement créer les objets correspondant à la requête, la méthode de parcours de la collection est lancée pour la collection récupérée, les objets étant alors créés un par un.

4. Dispositif de génération (GEN) d'interfaces orientées objet (OOI) selon l'une des revendications précédentes, **caractérisé en ce qu'**il comporte une classe appelée administrateur de base de données qui autorise la gestion de transactions et qui implémente quatre méthodes pour la réalisation des fonctions respectivement de validation d'une transaction, d'annulation d'une transaction, de connexion au système de gestion de bases de données relationnel (RDBMS) et de déconnexion dudit système de gestion de bases de données relationnel (ROBMS) et des moyens permettant de créer, pour chaque classe représentant une table relationnelle, une table contenant d'un côté les identificateurs des objets présents en mémoire, un identificateur d'objets étant une clé primaire qui identifie l'objet correspondant en relationnel, et de l'autre les adresses desdits objets, ces tables étant mises à jour par les méthodes utilisées pour la création ou la suppression d'un objet, alors que pour chaque classe, une classe table propre au nom de la classe est générée pour implémenter ces méthodes réalisant les fonctions de gestion de la mémoire et contenant la description de la table répertoriant les objets présents en mémoire, une telle gestion permettant ainsi de ne charger qu'une fois la même entité relationnelle en objet.

5. Dispositif de génération (GEN) d'interfaces orientées objet (OOI) selon la revendication 4, **caractérisé en ce que**, pour la réalisation des fonctions de gestion de la mémoire, le dispositif (GEN) comprend des moyens permettant d'implémenter trois méthodes, une première méthode permettant de savoir si l'objet correspondant à la clé passée en paramètre est déjà présent en mémoire et, si ce dernier y est, récupérer son adresse, une seconde méthode permettant de répertorier ledit objet comme étant présent en mémoire et enfin une troisième méthode permettant, en cas de destruction dudit objet, de la supprimer de la liste des objets présents en mémoire.

6. Procédé de génération d'interfaces orientées objet (OOI) mis en oeuvre par le dispositif de génération d'interfaces (GEN) selon l'une des revendications précédentes, comportant une analyse sémantique du schéma relationnel tenant compte de la présence ou non d'attributs et de clés, **caractérisé en ce qu'**il permet, en passant par différentes phases, de créer le schéma objet à partir du schéma relationnel (DBD) en traduisant systématiquement d'une part les tables relationnelles en classes et d'autre part les liens relationnels entre lesdites tables, exprimés au moyen de clés étrangères (FK), en liens entre objets représentés par des méthodes, générant pour cela, dans une première phase d'analyse lexicale et syntaxique, l'arbre syntaxique décrivant le schéma relationnel à partir du langage standard de définition et de manipulation de données, puis dans une seconde phase parcourant, une première fois, ledit arbre pour repérer toutes les tables de jointure, c'est-à-dire les tables n'ayant pour attributs (ATTRIBUTES) que des clés étrangères (FK), ensuite dans une troisième phase, parcourant l'arbre une seconde fois, pour générer une classe pour chaque table qui n'est pas une table de jointure, alors que pour chaque clé étrangère d'une telle table sont générées des méthodes de lien basées sur la création et l'utilisation de classes génériques (STUDENT, COURSE) pour la gestion de collections d'objets et que pour chaque table de jointure concernant ladite table sont également générées les méthodes de lien correspondant à la classe de ladite table.

7. Procédé selon la revendication 6 **caractérisé en ce qu'**il comprend des phases d'utilisation du dispositif de génération (GEN) d'interfaces orientées objet (OOI) comme composant d'accès à une base de données (DBR) dans un environnement distribué pour d'une part générer les interfaces (OOI) exprimées en langage de description d'interface des différentes classes (STUDENT, COURSE) et d'autre part générer un serveur à partir de ce composant.

## Patentansprüche

1. Vorrichtung (GEN) zum Erzeugen von objektorientierten Schnittstellen (OOI), um den Zugriff (OOA) von neuen Anwendungen, die in objektorientierten Umgebungen entwickelt worden sind, auf vorhandene relationale Datenbanken (RDBM) zuzulassen, mit Mitteln, die gemäß einem Verfahren zur Erzeugung objektorientierter Schnittstellen (OOI) und anhand eines Schemas (DBD) der relationalen Datenbanken (RDB) ein Objektschema erzeugen, das eine objektorientierte Ansicht der vorhandenen relationalen Datenbanken (RDB) bildet, wobei diese Ansicht, die die objektorientierte Schnittstelle (OOI) bildet, aus einer Gruppe von Klassen zusammengesetzt ist, die die in der relationalen Datenbank (RDB) gespeicherten Entitäten repräsentieren, wobei die Vorrichtung Mittel umfasst, die ermöglichen, am Eingang der Schnittstellenerzeugungsvorrichtung (GEN) die Beschreibung der Datenbank (DBD) in einer Standardsprache zur Definition und Manipulation von Daten einzugeben, **dadurch gekennzeichnet, dass** die Ansicht außerdem aus Verbindungsgliedern zwischen Objekten zusammengesetzt ist, die die relationalen Verbindungsglieder zwischen den Banken (RDB) repräsentieren, die durch Methoden repräsentiert sind, und dass die Vorrichtung versehen ist mit Mitteln, um die Objekte im Speicher zu verwalten und um die Objekte zu manipulieren, und Mitteln, die eine generische Klasse (Sammlung), die Sammlungsklasse genannt wird, erzeugen, die die Durchsuchung einer Gruppe von Instanzen einer Klasse oder der Instanzen, die Auswahlkriterien entsprechen, ermöglicht, um einen schnellen Zugriff auf die Daten zu ermöglichen, und die Mechanismen (RDBMS) des Steuersystems der relationalen Datenbank wie etwa die Cursor einkapselt, derart, dass die auf die Objekte im Speicher bezogenen Daten durch das Steuersystem (RDBMS) der Datenbank selbst verwaltet werden.

2. Vorrichtung (GEN) zur Erzeugung von objektorientierten Schnittstellen (OOI) nach Anspruch 1, mit Mitteln zum Ausführen einer semantischen Analyse des relationalen Schemas unter Berücksichtigung des Vorhandenseins oder Fehlens von Attributen und von Schlüsseln, **dadurch gekennzeichnet, dass** sie Mittel umfasst, die in verschiedenen Phasen das Objektschema anhand des relationalen Schemas (DBD) dadurch erzeugen, dass sie systematisch einerseits die relationalen Tabellen in Klassen übersetzen und andererseits die relationalen Verbindungsglieder zwischen den Tabellen, die durch fremde Schlüssel (FK) ausgedrückt sind, in Verbindungsglieder zwischen Objekten, die durch Methoden repräsentiert werden, übersetzen, wobei sie hierzu durch Mittel zur lexikalischen und syntaktischen Analyse den Syntaxbaum erzeugen, der das relationale Schema anhand der Standardsprache zur Definition und Manipulation von Daten beschreibt, dann Mittel umfasst, die im ersten Durchlauf des Baums alle Verbindungstabellen, d. h. die Tabellen, die als Attribute (ATTRIBUTES) nur die fremden Schlüssel (FK) besitzen, bezeichnen, und dann Mittel umfasst, die für jede Tabelle, die keine Verbindungstabelle ist, in einem zweiten Durchlauf des Baums eine Klasse erzeugen, wobei für jeden fremden Schlüssel einer solchen Tabelle Verbindungsmethoden erzeugt werden, die auf der Erzeugung und der Verwendung generischer Klassen (STUDENT, COURSE) für die Steuerung von Objektsammlungen basieren, und für jede Verbindungstabelle, die die Tabelle betrifft, außerdem die Verbindungsmethoden, die der Klasse dieser Tabelle entsprechen, erzeugt werden.

3. Vorrichtung (GEN) zur Erzeugung von objektorientierten Schnittstellen (OOI) nach einem der vorhergehenden Ansprüche, **dadurch gekennzeichnet, dass** die Sammlungsklasse, die sie erzeugt, zwei private Attribute (ATTRIBUTES), sowie zwei öffentliche Methoden (METHODS) umfasst, eine Methode zur Erzeugung von Instanzen der Klasse und eine Methode zum Durchlaufen der Sammlung, die die Wiedergewinnung der Objekte der Sammlungsklasse einzeln ermöglicht, wobei die Methode zur Erzeugung von Instanzen von Klassen als Eingangsparameter eine Anforderung in der Standardsprache zur Definition und Manipulation von Daten verwendet, die der Anwender ausgeben will, diese Anforderung ausführt und den Identifizierer des Cursors wiedergewinnt, der die n-Tupel enthält, die eine Antwort auf die Kriterien der Anforderung darstellen, wobei dann, wenn effektiv gewünscht ist, die der Anforderung entsprechenden Objekte zu erzeugen, die Methode zum Durchlaufen der Sammlung für die wiedergewonnene Sammlung gestartet wird, wobei die Objekte dann einzeln erzeugt werden.

4. Vorrichtung (GEN) zur Erzeugung von objektorientierten Schnittstellen (OOI) nach einem der vorhergehenden Ansprüche, **dadurch gekennzeichnet, dass** sie eine Datenbank-Administrator genannte Klasse enthält, die die Steuerung von Transaktionen gewährt und vier Methoden für die Verwirklichung von Funktionen zur Validierung einer Transaktion bzw. zur Annullierung einer Transaktion bzw. für den Anschluss an das System (RDBMS) zur Steuerung der relationalen Datenbanken bzw. zum Trennen von dem System (RDBMS) zur Steuerung der relationalen Datenbanken implementiert, und Mittel umfasst, die ermöglichen, für jede Klasse, die eine relationale Tabelle repräsentiert, eine Tabelle zu erzeugen, die einerseits die Identifizierer der im Speicher vorhandenen Objekte, wobei ein Objektidentifizierer ein primärer Schlüssel ist, der das entsprechende relationale Objekt identifiziert, und andererseits die Adressen der Objekte enthält, wobei diese Tabellen durch die Methoden, die für die Erzeugung oder die Unterdrückung eines Objekts verwendet werden, aktualisiert werden, wobei für jede Klasse eine Tabellenklasse, zu der der Name der Klasse gehört, erzeugt wird, um diese Methoden zu implementieren, die die Funktionen zur Steuerung des Speichers verwirklichen und die Beschreibung der Tabelle enthalten, die die im Speicher vorhandenen Objekte verzeichnet, wobei eine solche Steuerung somit ermöglicht dieselbe relationale Entität nur einmal in das Objekt zu laden.

5. Vorrichtung (GEN) zur Erzeugung von objektorientierten Schnittstellen (OOI) nach Anspruch 4, **dadurch gekennzeichnet, dass** für die Verwirklichung der Funktionen zur Steuerung des Speichers die Vorrichtung (GEN) Mittel umfasst, die ermöglichen, drei Methoden zu implementieren, wobei eine erste Methode ermöglicht, Kenntnis darüber zu erlangen, ob das Objekt, das dem zu dem Parameter gewordenen Schlüssel entspricht, bereits im Speicher vorhanden ist, und, falls dieses der Fall ist, seine Adresse wiederzugewinnen, eine zweite Methode ermöglicht, das Objekt als im Speicher vorhanden zu verzeichnen, und schließlich eine dritte Methode ermöglicht, bei der Zerstörung des Objekts dieses aus der Liste der im Speicher vorhandenen Objekt zu entfernen.

6. Verfahren zur Erzeugung von objektorientierten Schnittstellen (OOI), das von der Vorrichtung (GEN) zur Erzeugung von Schnittstellen nach einem der vorhergehenden Ansprüche ausgeführt wird, umfassend eine semantische Analyse des relationalen Schemas unter Berücksichtigung des Vorhandenseins oder Fehlens von Attributen und von Schlüsseln, **dadurch gekennzeichnet, dass** es beim Durchlaufen verschiedener Phasen ermöglicht, das Objektschema anhand des relationalen Schemas (DBD) zu erzeugen, indem es systematisch einerseits die relationalen Tabellen in Klassen übersetzt und andererseits die relationalen Verbindungsglieder zwischen den Tabellen, die durch fremde Schlüssel (FK) ausgedrückt sind, in Verbindungsglieder zwischen Objekten, die durch Methoden repräsentiert werden, übersetzt, indem es hierzu in einer ersten Phase zur lexikalischen und syntaktischen Analyse den Syntaxbaum erzeugt, der das relationale Schema anhand der Standardsprache zur Definition und Manipulation von Daten beschreibt, dann in einer zweiten Phase ein erstes Mal den Baum durchläuft, um alle Verbindungstabellen, d. h. die Tabellen, die als Attribute (ATTRIBUTS) nur fremde Schlüssel (FK) besitzen, zu bezeichnen, dann in einer dritten Phase den Baum ein zweites Mal durchläuft, um eine Klasse für jede Tabelle zu erzeugen, die keine Verbindungstabelle ist, wobei für jeden fremden Schlüssel einer solchen Tabelle Verbindungsmethoden erzeugt werden, die auf der Erzeugung und Verwendung von generischen Klassen (STUDENT, COURSE) basieren, um Objektsammlungen zu verwalten, und wobei für jede Verbindungstabelle, die diese Tabelle betreffen, ebenfalls die Verbindungsmethoden, die der Klasse dieser Tabelle entsprechen, erzeugt werden.

7. Verfahren nach Anspruch 6, **dadurch gekennzeichnet, dass** es Phasen der Verwendung der Vorrichtung (GEN) zur Erzeugung von objektorientierten Schnittstellen (OOI) als Komponente für den Zugriff auf eine Datenbank (RDB) in einer verteilten Umgebung umfasst, um einerseits die Schnittstellen (OOI) zu erzeugen, die in der Schnittstellenbeschreibungssprache der verschiedenen Klassen (STUDENT, COURSE) ausgedrückt sind, und um andererseits einen Server anhand dieser Komponente zu erzeugen.

## Claims

1. A device (GEN) for generating object-oriented interfaces (OOI) for allowing new applications (OOA) developed in object-oriented environments to access existing relational databases (RDB), comprising means for creating an object schema that constitutes an object-oriented view of the existing relational databases (RDB), according to a process for generating object-oriented interfaces (OOI) and on the basis of the schema (DBD) of the relational databases (RDB), this view, constituting the object-oriented interface (OOI), being composed of a set of classes representing the entities stored in the relational database (RDB), the device comprising means allowing the input of the interface-generation device (GEN) to have the database description (DBD) applied to it in a standard data definition and handling language, **characterised in that** said view is also composed of links between objects, which represent relational links between said databases (RDB), represented by methods and **in that** the device comprises means for managing the objects in memory and handling the objects, means for creating a generic class (Collection) called a collection class, which makes it possible to explore a set of instances of a class or the instances corresponding to selection criteria, in order to allow rapid access to data, and which encapsulates mechanisms of the relational database management system (RDBMS), such as cursors, so that the data relating to objects in memory are managed by the database management system (RDBMS) itself.

2. Device (GEN) for generating object-oriented interfaces (OOI) according to Claim 1, comprising means for making a semantic analysis of the relational schema taking account of the presence or otherwise of attributes and keys, **characterised in that** it comprises means for creating, in several phases, the object schema on the basis of the relational schema (DBD) by systematically translating, on the one hand, the relational tables into classes and, on the other hand, the relational links between said tables, expressed by means of foreign keys (FK), into links between objects represented by methods, generating for this purpose, by lexical and syntactic analysis means, the syntax tree describing the relational schema on the basis of the standard data definition and handling language, then means for identifying, by scanning the tree for the first time, all the join tables, i.e. the tables that have only foreign keys (FK) as attributes (ATTRIBUTES), then means for generating a class for each table that is not a join table by a second scan of the tree while, for each foreign key of such a table, link methods are generated based on the creation and use of generic classes (STUDENT, COURSE) for the management of collections of objects and while, for each join table concerning said table, the link methods corresponding to the class of said table are also generated.

3. Device (GEN) for generating object-oriented interfaces (OOI) according to one of the preceding claims, **characterised in that** the collection class that it creates comprises two private attributes (ATTRIBUTES) as well as two public methods (METHODS), a method for creating class instances and a method for scanning the collection that makes it possible to retrieve, one by one, the objects of the collection class, the method for creating class instances taking as input parameters a request, in a standard data definition and handling language, that the user wishes to initiate, executing this request and retrieving the identifier of the cursor containing n-tuplets meeting the criteria of the request while, if it is wished to actually create the objects corresponding to the request, the method for scanning the collection is initiated for the retrieved collection, the objects then being created one by one.

4. Device (GEN) for generating object-oriented interfaces (OOI) according to one of the preceding claims, **characterised in that** it comprises a class known as the database administrator, which allows the management of transactions and which implements four methods for performing the functions of, respectively, validating a transaction, cancelling a transaction, connecting to the relational data base management system (RDBMS), and disconnecting from said relational database management system (RDBMS) and means making it possible to create, for each class representing a relational table, a table containing, on one side, the identifiers of the objects present in memory, an object identifier being a primary key that identifies the corresponding object in relational terms and, on the other side, the addresses of said objects, these tables being updated by the methods used for creating or destroying an object while, for each class, a table class specific to the name of the class is generated in order to implement these methods performing the functions of memory management and containing the description of the table listing the objects present in memory, such management thus making it possible to load any one relational entity as an object once only.

5. Device (GEN) for generating object-oriented interfaces (OOI) according to Claim 4, **characterised in that**, for performing memory management functions, the device (GEN) comprises means making it possible to implement three methods, a first method making it possible to find out whether the object corresponding to the key passed as a parameter is already present in memory and, if the latter is there, retrieving its address, a second method making it possible to list said object as being present in memory and, finally, a third method making it possible, in the event of the destruction of said object, to remove it from the list of objects present in memory.

6. Process for generating object-oriented interfaces (OOI) implemented by the interface generation device (GEN) according to one of the preceding claims, comprising a semantic analysis of the relational schema taking account of the presence or otherwise of attributes and keys, **characterised in that**, by passing through various phases, it makes it possible to create the object schema on the basis of the relational schema (DBD) by systematically translating, on the one hand, the relational tables into classes and, on the other hand, the relational links between said tables, expressed by means of foreign keys (FK), into links between objects represented by methods, generating for this purpose, in a first phase of lexical and syntactic analysis, the syntax tree describing the relational schema on the basis of the standard data definition and handling language then, in a second phase, scanning said tree for the first time in order to identify all the join tables, i.e. the tables having only foreign keys (FK) as attributes (ATTRIBUTES) then, in a third phase, scanning the tree a second time in order to generate a class for each table that is not a join table while, for each foreign key of such a table, link methods are generated based on the creation and use of generic classes (STUDENT, COURSE) for the management of collections of objects and while, for each join table concerning said table, the link methods corresponding to the class of said table are also generated.

7. Process according to Claim 6, **characterised in that** it comprises phases of using the device (GEN) for generating object-oriented interfaces (OOI) as a component for accessing a database (RDB) in a distributed environment in order, on the one hand, to generate the interfaces (OOI), expressed in an interface description language, of the various classes (STUDENT, COURSE) and, on the other hand, to generate a server on the basis of this component.
